# EUROPEAN PATENT APPLICATION

(11) **EP 2 063 341 A1**
(43) Date of publication of application: **27.05.2009**
(21) Application number: 08013111.3
(22) Date of filing: 21.07.2008
(51) Int. Cl.: G06F 1/24

(54) **Protective circuit for microprocessor**

(30) Priority: 13.11.2007 TW 96219136 U
(71) Applicant: Wistron NeWeb Corp., 221 Hsichih Taipei Hsien (TW)
(72) Inventor: Huang, Chen-Chia, Hsichih, Taipei Hsien 221 (TW); Liu, Yao-Cheng, Hsichih, Taipei Hsien 221 (TW); Tsai, Chung-Hsing, Hsichih, Taipei Hsien 221 (TW)
(74) Representative: TER MEER - STEINMEISTER & PARTNER GbR

(57) **Abstract**

A protective circuit for microprocessor comprises an input terminal, a bias circuit, a reset circuit, and an output terminal, wherein the bias circuit coupled to the input terminal is configured to receive an input signal and generate a bias signal. The reset circuit coupled to the bias circuit is configured to receive a bias signal and generate a reset signal. The output terminal outputs the reset signal to a reset pin of the microprocessor so that the microprocessor is reset and protected from getting failure.

## Description

### CROSS REFERENCE TO RELATED APPILCATIONS

This application claims the benefit of TAIWAN Application No. 96219136, filed 2007/11/13.

### BACKGROUND OF THE INVENTION

### Field of the Invention

The invention relates to protective circuits, and more particularly to a protective circuit having bias circuits and reset circuits to prevent the microprocessors failure.

### Description of the Related Art

Hot plugging onto the circuit of electronic devices often result in an influx of large starting currents and variation of voltage for circuits within the electronic devices. Hot plugging not only impacts the normal operation of microprocessors but may also cause system damage.

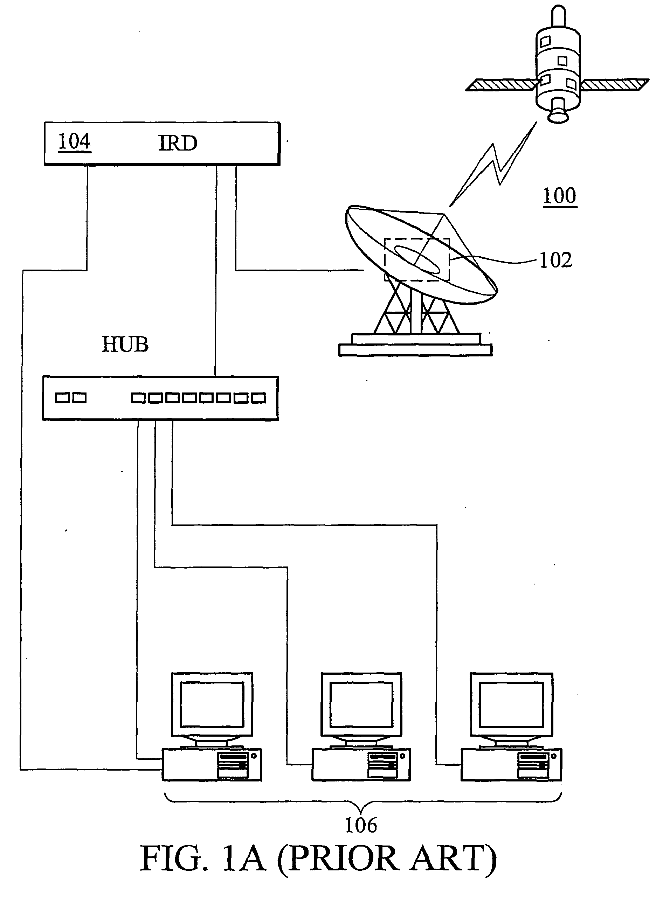

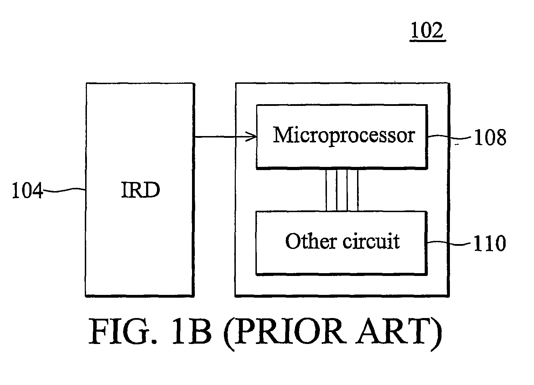

For example, Fig.1A shows a satellite receiver system 100, wherein the satellite receiver 102 comprising a microprocessor receives the digital TV signal transmitted from a satellite or a cable TV system. The satellite receiver 102 comprising the microprocessor is coupled to the Integrated Receiver Decoder (IRD) 104, wherein the digital TV signals are channel decoded and signal source decoded by the IRD 104. The satellite receiver 102 comprising the microprocessor is also coupled to the digital-to-analog converter, wherein the digital-to-analog signals are converted and video frequency signals are encoded by a digital-to-analog converter, and then sent to an ordinary TV receiver 106. Fig.1B shows a block diagram of a satellite receiver which comprises a microprocessor without a protective circuit. It is an original design of a satellite receiver 102. Without a protective circuit, when users plug a signal wire onto the IRD 102 at an input terminal, a high voltage signal may suddenly enter the microprocessor 108, and result in microprocessor failure.

Meanwhile, traditional protective circuits have several disadvantages, such as low reliability and high maintenance costs. The invention provides protective circuits for electronic devices with microprocessors, wherein hot plugging can be implemented. Additionally, this invention uses fewer components, thus increasing safety and reducing overall cost.

### BRIEF SUMMARY OF INVENTION

The present disclosure provides a protective circuit for a microprocessor. When a signal wire is inserted in or extracted from an electronic device which comprises a microprocessor, the protective circuit protects the microprocessor from noise or pulses so that microprocessor failure is prevented.

A protective circuit for a microprocessor is provided, comprising: an input terminal, a bias circuit, a reset circuit and an output terminal, wherein the bias circuit is coupled to the input terminal and used for converting an input signal to a bias signal when the input terminal receives the input signal, and wherein the reset circuit is coupled to the bias circuit and used to output a reset signal to the output terminal when receiving the bias signal for resetting the microprocessor, thus preventing the microprocessor from microprocessor failure due to hot plugging by users.

Further, a method for protecting a circuitry is provided comprising the steps of: receiving an input signal at an input terminal; converting the input signal into a bias signal in a bias circuit, when the input terminal receives the input signal; receiving the bias signal in a reset circuit; generating a reset signal based on the bias signal, and outputting the reset signal to a reset trigger of a microprocessor.

A detailed description is given in the following embodiments with reference to the accompanying drawings.

### BRIEF DESCRIPTION OF THE DRAWINGS

Many aspects of the disclosure of the invention can be better understood with reference to the following drawings. The components in the drawings are not necessarily to scale, wherein emphasis is placed upon clearly, illustration of the principles of the present disclosure. Moreover, in the drawings, like reference numerals designate corresponding parts throughout the different drawings.

FIG.1A is a schematic diagram of a satellite receiver system.

FIG.1B is a block diagram of a satellite receiver comprising a microprocessor.

FIG.2 is a schematic diagram of a microprocessor assembled with a protective circuit at the input terminal of the microprocessor.

FIG.3A is a block diagram according to the first embodiment of the invention.

FIG.3B is a circuit diagram according to the first embodiment of the invention.

FIG.4A is a block diagram according to the second embodiment of the invention.

FIG.4B is a circuit diagram according to the second embodiment of the invention.

FIG.5A is a block diagram according to the third embodiment of the invention.

FIG.5B is a circuit diagram according to the third embodiment of the invention.

FIG.6A is a block diagram according to the fourth embodiment of the invention.

FIG.6B is a circuit diagram according to the fourth embodiment of the invention.

FIG.7A is a circuit diagram of the bias circuit in the first displacement.

FIG.7B is a circuit diagram of the bias circuit in the second displacement.

FIG.7C is a circuit diagram of the bias circuit in the third displacement.

FIG.8 is a circuit diagram of the voltage converter in another displacement.

### DETAILED DESCRIPTION OF INVENTION

The following description is of the best-contemplated mode of carrying out the invention. This description is made for the purpose of illustrating the general principles of the invention and should not be taken in a limiting sense. The scope of the invention is best determined by reference to the appended claims.

### The first embodiment:

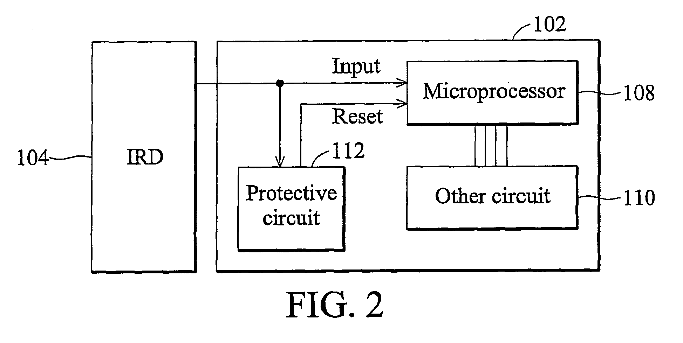

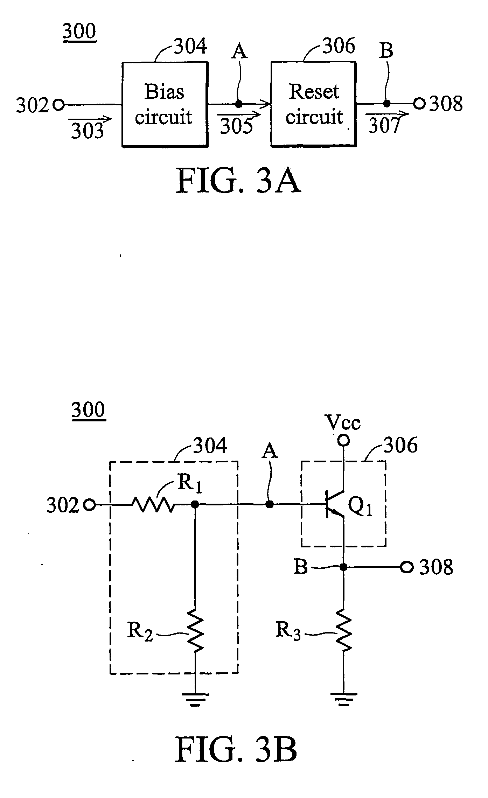

FIG.2 is a schematic diagram of a microprocessor assembled with a protective circuit at the input terminal of the microprocessor. A protective circuit between the input terminal and the reset trigger of the electronic devices help to prevent microprocessor failure caused by hot plugging. FIG.3A shows a protective circuit 300 according to an embodiment of the invention. A bias circuit 304 receives an input signal 303 from an input terminal 302 and generates a bias signal 305. A reset circuit 306 receives a bias signal 305 and generates a reset signal 307. The reset signal 307 resets the microprocessor coupled to the reset circuit 306 via an output terminal 308. FIG.3B is a circuit diagram according to the first embodiment of the invention. Note that for the FIGs., similar components the same with that in the prior art are labeled with the same symbols. As shown in FIG.3B, an input terminal 302 receives an input signal 303, a bias circuit 304 coupled to the input terminal 302 has a resistor R1 and a resistor R2 in series, wherein the input signal 303 is divided by these two resistor R1, R2 and generates a bias signal 305 at point A. Coupled to the bias circuit 304 is a reset circuit 306, wherein the reset circuit 306 comprises a switch Q1, which is a bipolar junction transistor in this embodiment, but the switch Q1 is not limited thereto. The collector of the switch Q1 is coupled to a voltage source V_{cc}, wherein the turning-on and -off of switch Q1 between the collector and the emitter is controlled by the bias signal 305 imposed on the base of the switch Q1, and wherein the reset circuit 306 receives the bias signal 305 and then generates a reset signal 307 at point B. The protective circuit 300 has two operating modes, and which will be discussed below:

(1) Before a user plugs a signal wire into the input terminal 302:

Since the resistor R2 of the bias circuit is grounded, the voltage level at point A is nearly zero and the reset circuit 306 is in a cut off state; therefore, the switch Q1 is cut off, there is no current flowing through point B, and the output terminal 308 is at a low voltage level so that the microprocessor is not active.

(2) When a user plugs a signal wire into the input terminal 302:
When a signal is inputted into the input terminal 302, the inputted signal is divided to the bias signal at point A by the resistor R1,R2 of the bias circuit 304. Note that those skilled in the art of the present disclosure, may adjust the voltage level of the bias signal to be high enough to turn on the switch Q1 without exceeding the voltage-withstand level of the switch Q1 by designing the ratio of the resistance of the resistor R1 to that of the resistor R2. When the switch Q1 of the reset circuit 306 is turned on, the voltage at point B increases to a high level which is slightly lower than the voltage source V_{cc} so that the microprocessor is reset and protected from microprocessor failure caused by hot plugging.

The second embodiment:

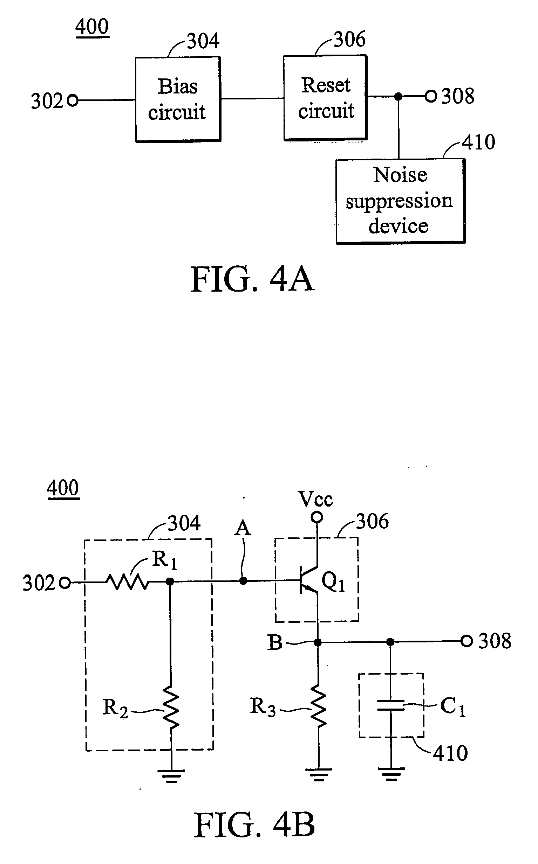

FIG.4A is a block diagram according to the second embodiment of the invention. FIG.4B is the circuit diagram according to the second embodiment of the invention. Similar to the first embodiment, the protective circuit 400 of the microprocessor comprises an input terminal 302, a bias circuit 304, a reset circuit 306 and an output terminal 308. Moreover, the protective circuit 400 of the microprocessor further comprises a noise suppression device 410. As shown in the FIG.4B, the capacitor C1 of the embodiment is used to prevent noise interference and strengthen circuit stability. However, if the microprocessor has enough capacity effect, the capacitor C 1 may be left out of the design.

The third embodiment:

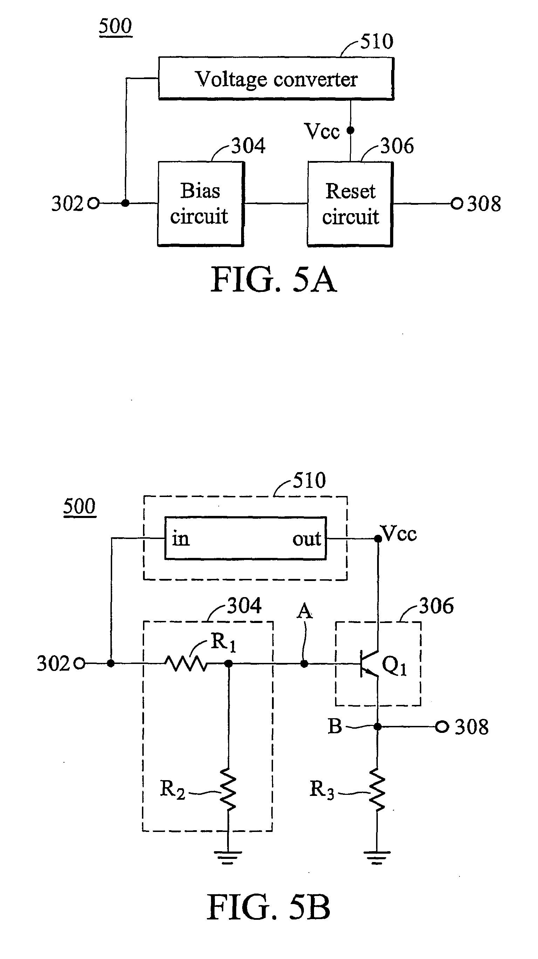

FIG.5A is a block diagram according to the third embodiment of the invention. FIG.5B is the circuit diagram according to the third embodiment of the invention. Similar to the first embodiment, the protective circuit 500 of the microprocessor comprises an input terminal 302, a bias circuit 304, a reset circuit 306 and an output terminal 308. Moreover, the protective circuit 500 of the microprocessor further comprises a voltage converter 510. As shown in FIG.5B, the voltage converter 510 receives the input signal from the input terminal 302 and generates the voltage V_{cc} to be provided to the reset circuit 306.

The third embodiment:

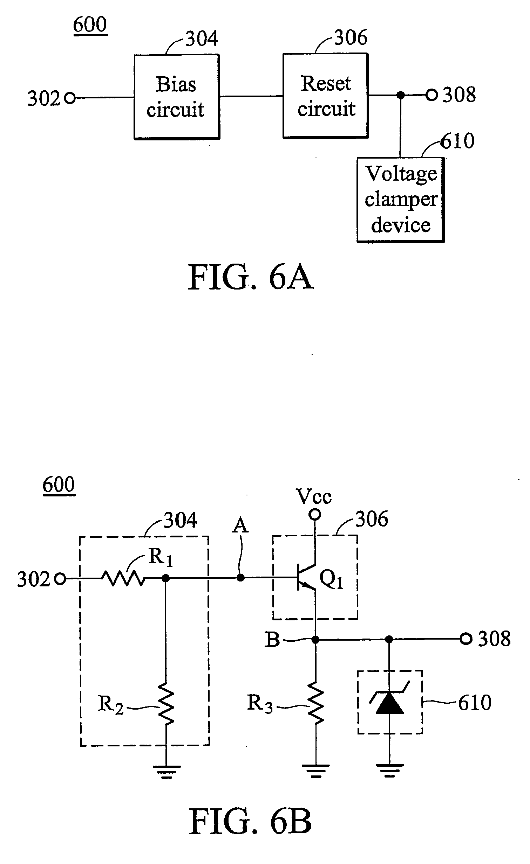

FIG.6A is a block diagram according to the fourth embodiment of the invention. FIG.6B is the circuit diagram according to the fourth embodiment of the invention. Similar to the first embodiment, the protective circuit 600 of the microprocessor comprises an input terminal 302, a bias circuit 304, a reset circuit 306 and an output terminal 308. Moreover, the protective circuit 600 of the microprocessor further comprises a voltage clamper device 610. As shown in FIG.6B, the voltage clamper device 610 is configured to restrain the voltage of the reset signal outputted from the reset circuit 306 to be within the voltage-withstand of the microprocessor.

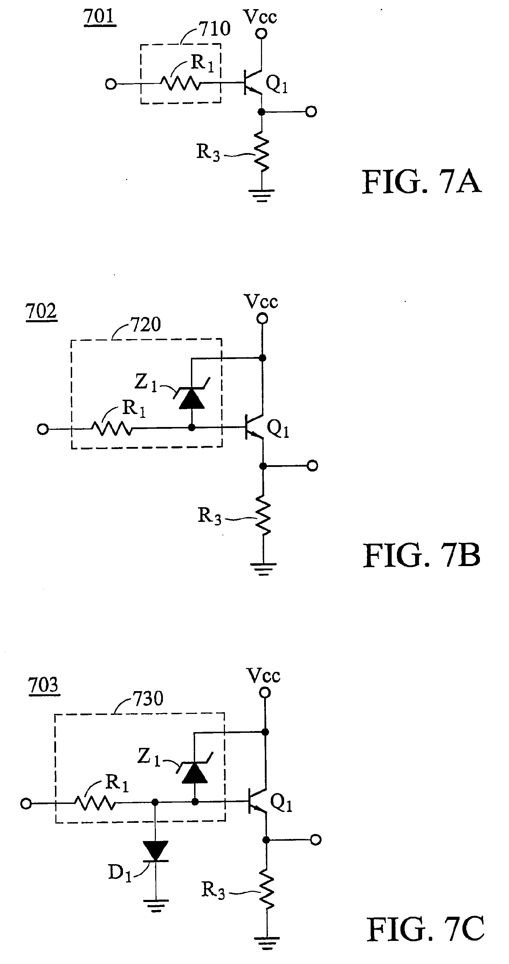

Other embodiments:
In the embodiments discussed above, the bias circuit 304 is not limited to be two resistors coupled in series, it could be replaced by a single resistor R1 as shown in FIG.7A. The bias circuit 304 could also be replaced by a resistor R1 and a Zener diode Z1, wherein the Zener diode Z1 is coupled to the voltage source V_{cc} as shown in FIG.7B. Additionally, the bias circuit 304 could also be replaced by a structure which comprises a resistor R1, a diode D1 and a Zener diode Z1, wherein the diode D1 is grounded and the Zener diode Z1 is coupled to the voltage source V_{cc} as shown in FIG.7C.

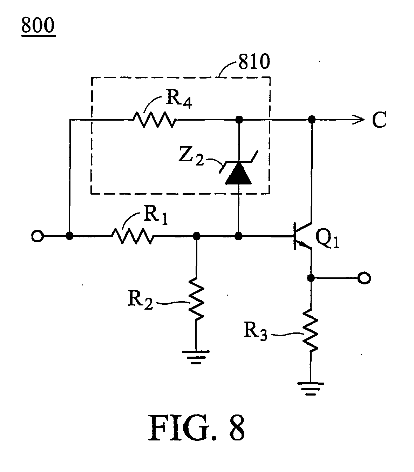

In all the embodiments discussed above, the voltage converter could be replaced by another type as shown in FIG.8, wherein it comprises a resistor R4 and a Zener diode Z2, and generates a voltage displacing the voltage source V_{cc} at point C.

It should be emphasized that the above-described embodiments of the present disclosure, particularly, any illustrated embodiments, are merely possible examples of implementations, merely set forth for a clear understanding of the principles of the disclosure. Many variations and modifications may be made to the above-described embodiment(s) of the disclosure without departing substantially from the principles of the disclosure. All such modifications and variations are intended to be included herein within the scope of this present disclosure and protected by the following claims.

## Claims

1. A protective circuit, comprising:
an input terminal;
an output terminal, coupled to a reset trigger of the microprocessor;
a bias circuit, coupled to the input terminal, for converting an input signal into a bias signal when the input terminal receives the input signal; and a reset circuit, coupled to the bias circuit, for outputting a reset signal to the output terminal to reset the microprocessor when the reset circuit receives the bias signal.

2. The protective circuit of claim 1, wherein the bias circuit comprises at least one resistor for limiting the bias signal to be within a voltage-withstand level of the reset circuit.

3. The protective circuit of claims 1 or 2, wherein the reset circuit comprises a switch coupled between a voltage source and the input terminal, wherein the switch is turned on by the bias signal and generates the reset signal at the output terminal.

4. The protective circuit as claimed in one of the claims 1 to 3, further comprising a noise suppression device, coupled to the output terminal, for noise suppression.

5. The protective circuit of claim 3, wherein the voltage source comprises a voltage converter, coupled to the input signal and/or the bias signal, for generating a voltage as the voltage source to be provided to the switch.

6. The protective circuit of claim 3, further comprising: a voltage clamper device, coupled to the input terminal, for limiting the voltage level of the reset signal to the microprocessor.

7. The protective circuit of claim 3, wherein the switch comprises a transistor.

8. The protective circuit of claim 6, wherein the voltage clamper device comprises a Zener diode.

9. The protective circuit of claim 4, wherein the noise suppression device comprises a capacitor.

10. Method for protecting a circuit, comprising:
receiving an input signal at an input terminal;
converting the input signal into a bias signal in a bias circuit, when the input terminal receives the input signal;
receiving the bias signal in a reset circuit;
generating a reset signal based on the bias signal, and
outputting the reset signal to a reset trigger of a microprocessor.

11. Method as claimed in claim 10, further comprising:
suppressing noise in the reset signal before inputting the reset signal into the microprocessor.

12. Method as claimed in claim 10 or 11, further comprising:
generating a source voltage for the reset circuit based on the input signal and/or the bias signal.

13. Method as claimed in one of the claims 10 to 12, further comprising:
limiting the voltage level of the reset signal.
